# FASCICULE DE BREVET EUROPEEN

(11) **EP 0 943 063 B1**
(45) Date de publication et mention de la délivrance du brevet: **19.12.2001**
(21) Numéro de dépôt: 97951316.5
(22) Date de dépôt: 11.12.1997
(51) Int. Cl.: F16F 9/04

(54) **PROCEDE DE REALISATION D'UN COUSSIN D'AIR SUR UNE STRUCTURE DE RECEPTION ET COUSSIN D'AIR OBTENU PAR LE PROCEDE**
VERFAHREN ZUR HERSTELLUNG EINES LUFTKISSENS AUF EINE AUFNAHMESTRUKTUR UND MIT DIESEM VERFAHREN HERGESTELLTES LUFTKISSEN
METHOD FOR PRODUCING AN AIR CUSHION ON A RECEIVING STRUCTURE AND AIR CUSHION OBTAINED USING THE METHOD

(30) Priorité: 12.12.1996 FR 9615466
(43) Date de publication de la demande: 22.09.1999
(73) Titulaire: Grizot, Gérard, 49300 Cholet (FR)
(72) Inventeur: Grizot, Gérard, 49300 Cholet (FR)
(74) Mandataire: Michelet, Alain
(86) Numéro de dépôt international: FR9702279
(87) Numéro de publication internationale: WO9826196

(56) Documents cités:
- WO-A-96/06288
- DE-A- 4 114 506
- DE-U- 1 841 198
- GB-A- 2 010 085
- GB-A- 2 155 873
- US-A- 3 746 605
- US-A- 4 745 635
- US-A- 4 869 939
- US-A- 5 152 023
- US-A- 5 545 463
- PATENT ABSTRACTS OF JAPAN vol. 95, no. 11, 26 décembre 1995 & JP 07 224876 A (NIPPON MEKTRON), 22 août 1995,

## Description

La présente invention concerne un nouveau procédé de réalisation d'un coussin d'air ou d'une poche d'air sur une structure de réception, en vue de former un élément d'amortissement ; elle concerne aussi le coussin d'air obtenu par ce procédé original.

Il est courant de positionner un élément d'amortissement sur une surface de réception quelconque, en vue d'améliorer le confort de contact ou pour amortir les chocs éventuels.
La structure d'amortissement du genre mousse ou poche à air est préparée à l'avance et elle est fixée par tout moyen approprié sur le support.

Les poches à air traditionnelles ne sont pas très simples à réaliser et elles sont difficilement adaptables sur toutes les configurations de support.

A titre indicatif, le document DE-1 841 198 U présente la possibilité de conformer un coussin d'air à l'extrémité d'une structure de piétement, ce coussin d'air étant constitué d'une forme souple en volume qui se prolonge par une embase plane solidarisée directement avec l'extrémité de ladite structure de piétement.
La technique de réalisation de ce coussin amortisseur n'est pas optimisée ni en simplicité, ni en qualité.

La présente invention a pour but de proposer une technique de fabrication simple et fiable qui permet la réalisation d'une poche d'air sur de nombreux types de support différents, et ceci indépendamment de la forme et de la configuration de ce support.

Le procédé de réalisation d'un coussin d'air sur une structure de réception, conforme à la présente invention, consiste :
- à fabriquer le dessus du coussin par une opération de moulage de matière étanche à l'air, ce dessus moulé étant constitué d'une coquille souple conformée selon le volume désiré, ladite coquille étant bordée par une embase périphérique,
- à préparer indépendamment la structure de réception, avec une rainure continue dont la forme générale correspond au contour de l'embase périphérique dudit dessus moulé, et
- à fixer de façon étanche ladite embase périphérique dudit dessus moulé dans ladite rainure continue aménagée dans la structure de réception, pour emprisonner un volume d'air, ladite structure de réception formant alors le dessous dudit coussin en matériau étanche à l'air.
Cette technique permet de faciliter le positionnement du dessus moulé sur la structure de réception ; on optimise également la qualité de solidarisation entre les deux éléments, par collage ou par soudage (thermique, à hautes fréquences ou à ultrasons).
Cette technique de fabrication permet aussi de former au préalable le dessus du coussin, d'une part en fonction de la configuration de surface désirée, et d'autre part en fonction de la forme de la structure de réception.

Le coussin d'air obtenu par la mise en oeuvre du procédé est constitué d'une structure de réception munie d'une rainure continue dans laquelle est positionnée et fixée de façon étanche l'embase périphérique du dessus moulé souple. Ce dessus est avantageusement constitué d'au moins une alvéole bombée qui emprisonne un volume d'air ; il est réalisé en matière souple et/ou élastique pour former un organe d'amortissement assimilable à une épaisseur de mousse compressible.

Toujours selon l'invention, la rainure continue aménagée dans la structure de réception se présente sous la forme d'une feuillure réalisée sur la bordure de la structure de réception ; on peut aussi prévoir une rainure à section en U réalisée dans le corps même de la structure de réception.

Selon une autre caractéristique intéressante, le dessus moulé comporte au moins un point ou une ligne de creusure, en fonction de l'aspect de surface désiré. Cette ligne de creusure se prolonge avantageusement vers l'intérieur par une nervure de rigidification qui peut, ou non, être solidarisée avec la structure de réception, en fonction du type d'amortissement désiré.

Selon une autre caractéristique de l'invention, la structure de réception comporte une ouverture adaptée pour le logement d'un insert, lequel insert est de préférence réalisé en matériau transparent permettant l'accès visuel à l'intérieur du coussin, ou permettant simplement de matérialiser la présence de la poche d'air.

Mais l'invention sera encore illustrée, sans être aucunement limitée, par la description suivante de différents modes de réalisation, donnés uniquement à titre d'exemples et représentés sur les dessins annexés dans lesquels :
- la figure 1 est une vue en perspective qui montre le dessus moulé séparé de la surface de réception ;
- la figure 2 montre les deux éléments assemblés formant le coussin d'air ;
- la figure 3 est une vue en coupe selon 3-3 de la figure 2 ;
- la figure 4 est une vue en perspective d'un dessus moulé et d'une structure de réception séparés, pour la réalisation d'une autre forme de coussin d'air ;
- la figure 5 montre le coussin d'air obtenu par l'association des deux éléments séparés de la figure 4 ;
- la figure 6 est une coupe longitudinale selon 6-6 de la figure 5 ;
- la figure 7 est une vue en coupe transversale selon 7-7 de la figure 5 ;
- la figure 8 est une vue de dessus d'une autre forme de réalisation possible du coussin d'air ;
- la figure 9 est une vue en coupe selon 9-9 de la figure 8 ;
- la figure 10 illustre une autre forme de réalisation possible du coussin d'air, vu de dessus ;
- la figure 11 est une vue en coupe selon 11-11 de la figure 10.

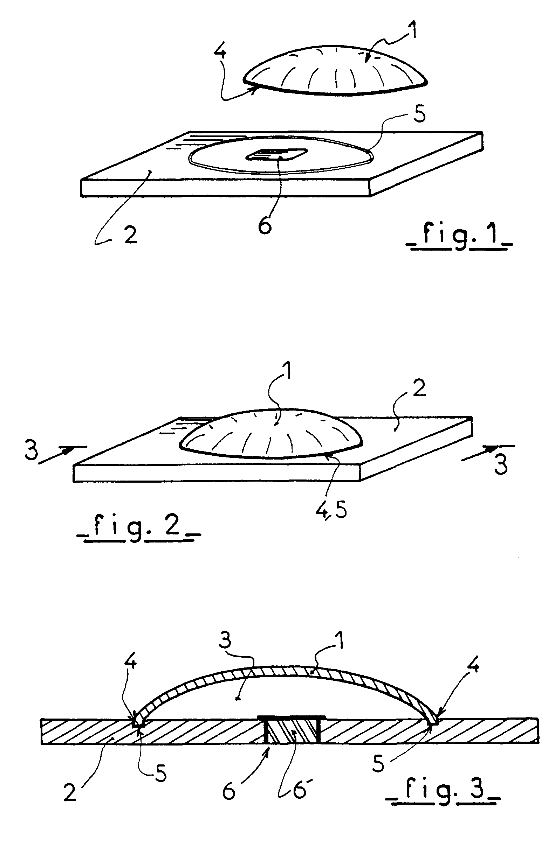

Les figures 1 à 3 illustrent une première forme de réalisation possible d'un coussin d'air obtenu selon la technique de la présente invention.

D'une manière générale, ce coussin d'air est formé d'une partie souple formant le dessus 1 solidarisé avec une structure de réception 2 formant le dessous.

Le dessus 1 consiste en une coquille souple conformée pour définir un volume d'emprisonnement d'air 3, bordée par une embase périphérique 4. Ce dessus souple 1 est réalisé par moulage de matière plastique ou similaire du type étanche à l'air. Sa souplesse et/ou son élasticité est adaptée à la fonction d'amortissement désirée. Sa configuration de surface peut être quelconque, adaptée à l'esthétique ou au type d'amortissement désiré et son embase périphérique 4 est fonction de la forme générale de la surface de réception sur la structure 2.

La structure de réception 2 peut consister en tout type de matériau étanche à l'air, de préférence rigide ou semi-rigide. Il peut s'agir d'une structure préexistante, ou bien d'un produit préparé tout spécialement pour la réception du dessus 1. La face supérieure de cette structure de réception comporte une rainure continue 5, dont la forme générale correspond au contour de l'embase périphérique 4 du dessus 1. La section ici en U, de la rainure 5, est adaptée à celle de l'embase 4.

Pour former le coussin d'air, l'embase périphérique 4 de la coquille moulée 1 est positionnée dans la rainure 5 de la structure de réception 2 et la solidarisation entre les deux éléments est réalisée de façon étanche à l'air, par tout moyen approprié tel qu'un collage ou une soudure (ultrasons, chaleur, haute fréquence ...). Cette particularité permet de faciliter le positionnement du dessus 1 sur la structure de réception 2 et elle permet aussi d'obtenir une excellente qualité de solidarisation entre les deux éléments.

Comme on l'a représenté sur les figures 1 et 3, pour certains modes de réalisation particuliers, on peut prévoir de réaliser une ouverture 6 dans la structure de réception 2 et de combler cette ouverture par un insert approprié 6'. Cet insert 6', fixé de façon étanche peut être réalisé en matériau transparent pour permettre d'accéder visuellement à l'intérieur du coussin d'air ; il peut également consister en une valve de gonflage, ou autre.

Dans le mode de réalisation des figures 1 à 3, le dessus 1 est constitué d'une alvéole bombée en matière plastique. Son embase périphérique 4 est circulaire et elle vient se fixer sur une structure de réception 2 plane.

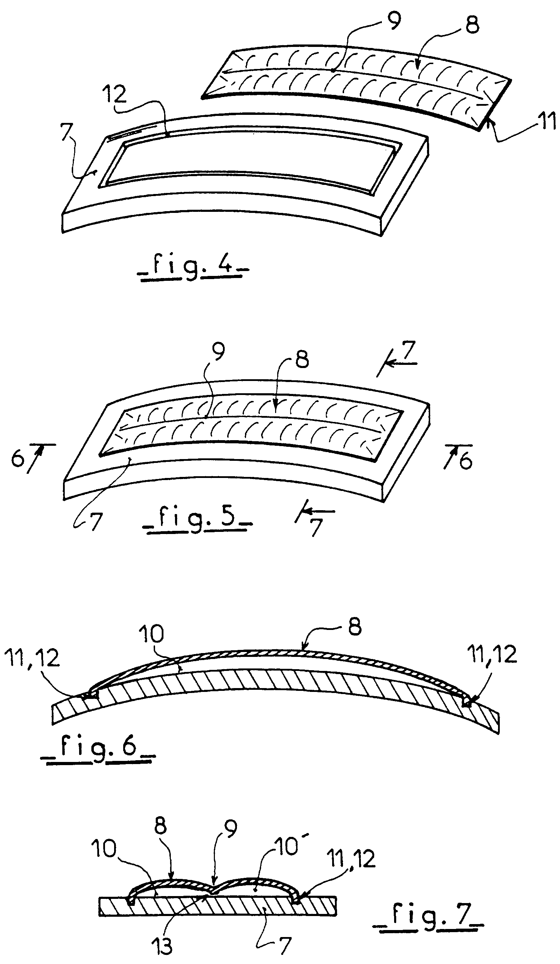

On a représenté sur les figures 4 à 7 une autre forme de réalisation d'un coussin d'air aménagé sur une structure de réception 7 non plane. Le dessus moulé 8 a une forme générale rectangulaire; une ligne de creusure 9 le sépare en deux alvéoles bombées 10 et 10'.

L'embase périphérique 11 du dessus 8 est adaptée pour venir s'insérer dans une rainure 12 à section en U aménagée dans le corps même de la structure de réception 7, sur la surface supérieure de celle-ci.

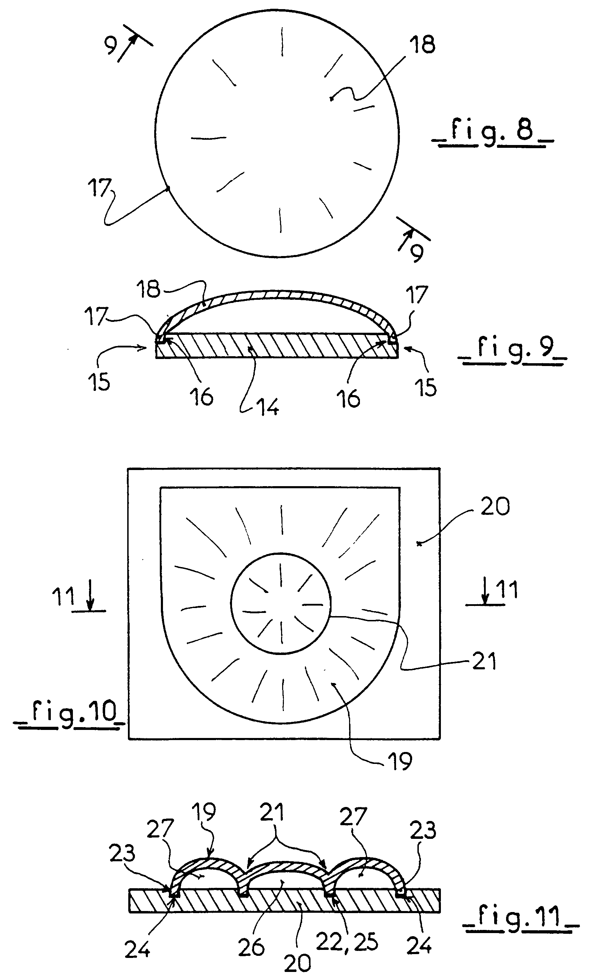

La ligne de creusure 9 est adaptée selon l'effet esthétique ou fonctionnel recherché, par exemple pour faciliter le pliage de l'ensemble. Elle se prolonge intérieurement par une nervure de rigidification 13, visible figure 7. Dans ce mode de réalisation, la nervure 13 n'est pas solidarisée avec le support 7 et les deux alvéoles 10 et 10' communiquent entre elles.

Sur les figures 8 et 9, le coussin d'air est réalisé à partir d'une structure de réception 14 de forme générale circulaire, sur la bordure 15 de laquelle on a aménagé une feuillure périphérique 16. Cette feuillure 16 permet le positionnement de l'embase périphérique 17 du dessus 18 constitué, dans le cas présent, d'une alvéole circulaire bombée.

Sur les figures 10 et 11, le coussin d'air est constitué par un dessus alvéolé 19 solidarisé sur une structure de réception plane 20. Le dessus 19 comporte une creusure circulaire 21 qui se prolonge intérieurement par une nervure de rigidification 22. L'embase périphérique 23 et la nervure de rigidification 22 viennent s'insérer et se fixer dans deux rainures continues, respectivement 24 et 25 aménagées dans la structure de réception 20.
Cette configuration définit une alvéole centrale bombée 26 entourée par une couronne alvéolaire bombée 27 qui ne communiquent pas entre elles.

Dans le cadre de la présente invention, toutes les formes de dessus peuvent être envisagées, avec une surface de contact munie ou non de lignes de creusure, ou d'impacts ponctuels de creusure.

Cette technique de fabrication présente l'intérêt de permettre la réalisation d'un coussin d'air sur n'importe quel type de support étanche à l'air. Il suffit en effet de préparer un dessus 1 adapté selon le type d'amortissement désiré et selon le type de structure de réception.

Ce procédé peut être utilisé dans tous les domaines où l'on désire optimiser un confort de contact ou réaliser un élément amortisseur, dans un but de sécurité par exemple. A titre purement indicatif, il peut concerner le domaine de la sellerie, de la sécurité automobile, ou même dans le domaine de la chaussure pour la réalisation de languettes ou de semelles munies de poches d'air sur l'avant-pied, le talon voire même la voûte plantaire.

## Revendications

1. Procédé de réalisation d'un coussin d'air sur une structure de réception, **caractérisé en ce qu'**il consiste :
- à fabriquer le dessus (1, 8, 18, 19) du coussin par une opération de moulage de matière étanche à l'air, ce dessus moulé (1, 8, 18, 19) étant constitué d'une coquille souple conformée selon le volume désiré, ladite coquille souple étant bordée par une embase périphérique (4, 11, 17, 23),
- à préparer indépendamment la structure de réception (2, 7, 14, 20) avec une rainure continue (5, 12, 16, 24) dont la forme générale correspond au contour de l'embase périphérique (4, 11, 17, 23) du dessus (1, 8, 18, 19), et
- à fixer de façon étanche l'embase périphérique (4, 11, 17, 23) du dessus moulé (1, 8, 18, 19) dans la rainure continue (5, 12, 16, 24) aménagée dans la structure de réception (2, 7, 14, 20).

2. Coussin d'air obtenu par la mise en oeuvre du procédé selon la revendication 1, lequel coussin est constitué d'une structure de réception (2, 7, 14, 20) munie d'une rainure continue (5, 12, 16, 24) dans laquelle est positionnée et fixée de façon étanche l'embase périphérique (4, 11, 17, 23) du dessus moulé souple (1, 8, 18, 19).

3. Coussin d'air selon la revendication 2, **caractérisé en ce qu'**il comporte une rainure (16) en forme de feuillure sur la bordure de la structure de réception (14), pour le positionnement et la fixation de l'embase périphérique (17) du dessus moulé (18).

4. Coussin d'air selon la revendication 2, **caractérisé en ce qu'**il comporte une rainure (5, 12, 24) à section en U, réalisée dans le corps de la structure de réception (2, 7, 20), pour le positionnement et la fixation de l'embase périphérique (4, 11, 23) du dessus moulé (1, 8, 19).

5. Coussin d'air selon l'une quelconque des revendications 2 à 4, **caractérisé en ce que** le dessus moulé (1, 8, 18, 19) est constitué d'au moins une alvéole bombée.

6. Coussin d'air selon l'une quelconque des revendications 2 à 5, **caractérisé en ce que** le dessus moulé (1, 8, 18, 19) comporte au moins un point ou une ligne de creusure (9, 21), notamment en fonction de l'aspect de surface désiré.

7. Coussin d'air selon la revendication 6, **caractérisé en ce que** la ligne de creusure (9, 21) se prolonge intérieurement par une nervure de rigidification (13, 22).

8. Coussin d'air selon la revendication 7, **caractérisé en ce qu'**il comporte une nervure de rigidification (22) solidarisée avec la structure de réception (20).

9. Coussin d'air selon l'une quelconque des revendications 2 à 8, **caractérisé en ce que** la structure de réception (2) comporte une ouverture (6) adaptée pour le logement d'un insert (6').

10. Coussin d'air selon la revendication 9, **caractérisé en ce qu'**il comporte un insert (6') en matériau transparent permettant l'accès visuel à l'intérieur même du coussin ou permettant simplement de matérialiser la présence de la poche d'air.

## Patentansprüche

1. Verfahren zur Herstellung eines Luftkissens auf einer Aufnahmestruktur, **dadurch gekennzeichnet, dass**:
- die Oberseite (1, 8, 18, 19) des Kissens durch einen Ausformungsvorgang aus luftdichter Materie hergestellt wird , wobei die ausgeformte Oberseite (1, 8, 18, 19) aus einer flexiblen , dem gewünschten Volumen angepassten Schale besteht, wobei die besagte flexible Schale von einem Umfangsansatz (4, 11, 17, 23) umgeben ist,
- unabhängig davon die Aufnahmestruktur (2, 7, 14, 20) mit einer durchgehenden (5, 12, 16, 24) Nut hergerichtet wird, deren allgemeine Form dem Umriss des Umfangsansatzes (4, 11, 17, 23) der Oberseite (1, 8, 18, 19) entspricht, und
- der Umfangsansatz (4, 11, 17, 23) der ausgeformten Oberseite (1, 8, 18, 19) abdichtend in der in der Aufnahmestruktur (2, 7, 14, 20) ausgbildeten durchgehenden (5, 12, 16, 24) Nute befestigt ist.

2. Mit dem Verfahren nach Anspruch 1 hergestelltes Luftkissen, wobei das besagte Kissen aus einer Aufnahmestruktur (2, 7, 14, 20) besteht, die mit einer durchgehenden (5, 12, 16, 24) Nut versehen ist, in der der Umfangsansatz (4, 11, 17, 23) der ausgeformten Oberseite (1, 8, 18, 19) abdichtend positioniert und befestigt worden ist.

3. Luftkissen nach Anspruch 2, **dadurch gekennzeichnet, dass** es eine Nut (16) in Form einer Ausfalzung am Rande der Aufnahmestruktur (14) zur Positionierung und Befestigung des Umfangsansatzes (4, 11, 17, 23) der ausgeformten Oberseite (1, 8, 18, 19) aulweist.

4. Luftkissen nach Anspruch 2, **dadurch gekennzeichnet, dass** es eine in der Aufnahmestruktur (14) ausgebildete Nut (16) mit U-förmigem Querschnitt zur Positionierung und Befestigung des Umfangsansatzes (4, 11, 17, 23) der ausgeformten Oberseite (1, 8, 18, 19) aufweist.

5. Luftkissen nach irgendeinem der Ansprüche 2 bis 4, **dadurch gekennzeichnet, dass** die ausgeformte Oberseite (1, 8, 18, 19) aus mindestens einer gewölbten Zelle besteht.

6. Luftkissen nach irgendeinem der Ansprüche 2 bis 5, **dadurch gekennzeichnet, dass** die ausgeformte Oberseite (1, 8, 18, 19) mindestens einen Vertiefungspunkt oder eine Vertiefungslinie (9, 21), insbesondere in Abhängigkeit vom gewünschten Oberflächenaspekt, aufweist.

7. Luftkissen nach Anspruch 6, **dadurch gekennzeichnet, dass** die Vertiefungslinie (9, 21) sich innen durch eine Versteifungsrippe (13, 22) verlängert.

8. Luftkissen nach Anspruch 7, **dadurch gekennzeichnet, dass** es eine mit der Aufnahmestruktur (20) einstückig gemachte Versteifungsrippe (22) aufweist.

9. Luftkissen nach irgendeinem der Ansprüche 2 bis 8, **dadurch gekennzeichnet, dass** die Aufnahmestruktur (2) eine für das Einbringen eines Einsatzes (6') angepasste Öffnung (6) aufweist.

10. Luftkissen nach Anspruch 9, **dadurch gekennzeichnet, dass** es einen Einsatz (6') aus transparentem Material aufweist, wodurch ein visueller Zugang zum Inneren selbst des Kissens ermöglicht wird oder es einfach ermöglicht wird, das Vorhandensein eines Lufteinschlusses zu erkennen.

## Claims

1. A method for producing an air cushion on a receiving structure, **characterised in that** it comprises the steps of:
- in making the top (1, 8, 18, 19) of the cushion by an airtight moulding operation, whereas this moulded top (1, 8, 18, 19) comprises a flexible shell according to the requested volume, and the said flexible shell is enclosed by a peripheral base (4, 11, 17, 23),
- preparing the receiving structure (2, 7, 14, 20) independently with a continuous groove (5, 12, 16, 24) whose general shape matches the contour of the peripheral base (4, 11, 17, 23) of the top (1, 8, 18, 19) and
- sealingly fixing the peripheral base (4, 11, 17, 23) of the moulded top (1, 8, 18, 19) in the continuous groove (5, 12, 16, 24) provided in the receiving structure (2, 7, 14, 20).

2. An air cushion obtained by carrying out the method according to claim 1, which cushion is made of a receiving structure (2, 7, 14, 20) provided with a continuous groove (5, 12, 16, 24) in which the peripheral base (4, 11, 17, 23) of the flexible moulded top (1, 8, 18, 19) is positioned and sealingly fixed.

3. An air cushion according to claim 2, **characterised in that** it comprises a groove (16) in the form of a notch on the rim of the receiving structure (14), for positioning and fixing the peripheral base (17) of the moulded top (18).

4. An air cushion according to claim 2, **characterised in that** it comprises a U-shaped groove (5, 12, 24), made in the body of the receiving structure (2, 7, 20), for positioning and fixing the peripheral base (4, 11, 23) of the moulded top (1, 8, 19).

5. An air cushion according to any one of claims 2 to 4, **characterised in that** the moulded top (1, 8, 18, 19) is made of at least one domed honeycomb.

6. An air cushion according to any one of claims 2 to 5, **characterised in that** the moulded top (1, 8, 18, 19) comprises at least one hollow portion or line (9, 21) notably in relation to the requested surface profile.

7. An air cushion according to claim 6, **characterised in that** the hollow portion (9, 21) is extended inwardly by a stiffening groove (13, 22).

8. An air cushion according to claim 7, **characterised in that** it comprises a stiffening groove (22) integral with the receiving structure (20).

9. An air cushion according to any one of claims 2 to 8, **characterised in that** the receiving structure (2) comprises an opening (6) suited to accommodate an insert (6').

10. An air cushion according to claim 9, **characterised in that** it comprises an insert (6') made of transparent material for visual access inside the cushion or enabling simply to materialise the presence of the air pocket.
